# EUROPÄISCHE PATENTSCHRIFT

(11) **EP 1 106 401 B1**
(45) Veröffentlichungstag und Bekanntmachung des Hinweises auf die Patenterteilung: **02.07.2008**
(21) Anmeldenummer: 00125451.5
(22) Anmeldetag: 21.11.2000
(51) Int. Cl.: B60G 17/015, B60G 17/052

(54) **Verfahren zur Steuerung bzw. Regelung des Niveaus eines Fahrzeugaufbaus eines Kraftfahrzeuges**
Method for controlling or regulating the height of a motor vehicle body
Procédé pour la commande ou la régulation du niveau de la carosserie d'un véhicule automobile

(30) Priorität: 08.12.1999 DE 19959012
(43) Veröffentlichungstag der Anmeldung: 13.06.2001
(73) Patentinhaber: Continental Aktiengesellschaft, 30165 Hannover (DE)
(72) Erfinder: Stiller, Alexander, Dr., 30823 Garbsen (DE)

(56) Entgegenhaltungen:
- EP-A- 0 728 604
- US-A- 5 180 024
- US-A- 5 286 059

## Beschreibung

Verfahren zur Steuerung oder Regelung des Niveaus eines Fahrzeugaufbaus eines Kraftfahrzeuges mittels einer Niveauregelanlage mit Stellgliedern, mit denen das Niveau des Fahrzeugaufbaus durch Ablassen eines Stellmittels aus den Stellgliedern absenkbar ist und mit einer Steuereinheit in folgenden Verfahrensschritten:
- das Niveau des Fahrzeugaufbaus gegenüber einem Bezugspunkt wird ermittelt
- es wird ein Ablassvorgang des Fahrzeugaufbaus eingeleitet, wenn das ermittelte Niveau über einem vorgegebenen Niveau liegt.

Moderne Kraftfahrzeuge verfügen häufig über eine Niveauregelanlage, z.B. in Form eines Luftfedersystems, das als Stellglieder Luftfedern aufweist. In der Steuereinheit der Niveauregelanlage ist ein vorgegebenes Niveau gespeichert, das der Fahrzeugaufbau des Kraftfahrzeuges gegenüber einem festen Bezugspunkt einnehmen soll. Das vorgegebene Niveau kann ggf. vom Fahrer des Kraftfahrzeuges an die aktuelle Fahrsituation angepaßt werden. Ist beispielsweise im Gelände eine besonders große Bodenfreiheit des Kraftfahrzeuges notwendig, so kann der Fahrer, z.B. über einen Schalter im Armaturenbrett, in der Steuereinheit ein entsprechend hohes Niveau vorgeben.

Niveauregelanlagen haben den Vorteil, daß das vorgegebene Niveau unabhängig vom Beladungszustand des Kraftfahrzeuges durch Absenken oder Anheben des Fahrzeugaufbaus eingehalten werden kann. Darüber hinaus kann der Fahrzeugaufbau auch auf ein tiefes Niveau abgesenkt werden, z.B. um ein einfaches Beladen des Fahrzeuges zu ermöglichen.

Bei einem Kraftfahrzeug mit einer Niveauregelanlage können jedoch folgende Probleme auftreten: Der Fahrzeugaufbau des Kraftfahrzeugs kann auf dem Untergrund aufsetzen (z.B. auf Schnee oder im Gelände), wobei die Räder des Kraftfahrzeuges gegenüber dem Fahrzeugaufbau absinken. Infolgedessen kann das aktuelle Niveau des Fahrzeugaufbaus höher liegen als das in der Steuereinheit vorgegebene Niveau, so daß die Steuereinheit einen Ablassvorgang des Fahrzeuges einleitet (z.B. durch Ablassen von Druckluft aus den Luftfedern eines Luftfedersystems), um das aktuelle Niveau an das vorgegebene Niveau anzugleichen. Dies verstärkt das Aufsetzen des Kraftfahrzeuges auf dem Untergrund, so daß eine ungehinderte Weiterfahrt des Kraftfahrzeuges nicht möglich ist.

Ein weiteres Problem ergibt sich, wenn das Kraftfahrzeug mittels einer Hebebühne angehoben wird. In diesem Fall federn die Räder des Kraftfahrzeuges vollkommen aus, so daß der Fahrzeugaufbau ein Maximalniveau deutlich über dem in der Steuereinheit vorgegebenen Niveau annimmt. Die Steuereinheit leitet dann einen Ablassvorgang ein, durch den das aktuelle Niveau des Fahrzeugaufbaus an das vorgegebene Niveau angepaßt werden soll. Dies geschieht dadurch, daß aus den Stellgliedern der Niveauregelanlage ein Stellmittel abgelassen wird (Hydraulikflüssigkeit bei einer hydraulischen Niveauregelanlage und Druckluft aus Luftfedern bei einer pneumatischen Niveauregelanlage). Da sich der Fahrzeugaufbau nicht absenkt, werden die Stellglieder weitestgehend entleert, bis nur noch ein Minimum des Stellmittels in ihnen enthalten ist. Ein Ventil verhindert bei Erreichen des Minimums ein weiteres Ablassen des Stellmittels. Wird das Kraftfahrzeug von der Hebebühne heruntergenommen, so sinkt es aufgrund des geringen Stellmittelniveaus in den Stellgliedern unter das vorgegebene Niveau ab, so daß die Stellglieder wieder mit dem Stellmittel aufgefüllt werden müssen, um den Fahrzeugaufbau auf das vorgegebene Niveau anzuheben. Dies ist zeitaufwendig und beansprucht darüber hinaus die Komponenten der Niveauregelanlage, mit denen das Stellmitttel in die Stellglieder geführt wird.

Das gleiche Problem ergibt sich für ein einziges Stellglied der Niveauregelanlage, wenn das diesem Stellglied zugeordnete Rad mit einem Wagenheber angehoben wird.

Zusammenfassend ist festzustellen, daß in bestimmten kritischen Situationen des Kraftfahrzeuges (nämlich beim Aufsitzen des Fahrzeugaufbaus auf dem Untergrund bzw. auf der Hebebühne) durch die Steuereinheit ein Absenken des Fahrzeugaufbaus bzw. ein Entleeren der Stellglieder der Niveauregelanlage veranlaßt wird, obwohl dies in diesen Situationen nicht erwünscht ist.

Aus der US 5,452,919 ist ein Verfahren der eingangs genannten Art bekannt, bei dem während eines Ablassvorganges zunächst Druckluft aus den Luftfedern einer Niveauregelanlage über eine vorgegebene Zeitspanne abgelassen wird. Für den Fall, daß der gesamte Ablassvorgang unter normalen Umständen weniger als die vorgegebene Zeitspanne in Anspruch nimmt, kommt es bei einem auf dem Untergrund aufsitzenden Fahrzeug dazu, daß mehr Druckluft aus den Luftfedern abgelassen wird, als für den normalen Ablassvorgang eigentlich notwendig wäre.

Der Erfindung liegt die Aufgabe zugrunde, ein Verfahren zur Steuerung oder Regelung des Niveaus eines Fahrzeugaufbaus eines Kraftfahrzeuges mittels einer Niveauregelanlage zu schaffen, mit dem ein Aufsitzen des Fahrzeugaufbaus auf dem Untergrund bzw. auf einer Hebebühne möglichst frühzeitig erkannt werden kann, um ein unerwünschtes Absenken des Fahrzeugniveaus weitestgehend zu vermeiden.

Die Aufgabe wird durch die kennzeichnenden Merkmale des Anspruchs 1 gelöst.

Unter einem Ablassvorgang ist ein Vorgang zu verstehen, mit dem das aktuelle Niveau des Fahrzeugaufbaus durch Ablassen von Stellmittel aus den Stellgliedern der Niveauregelanlage an das in der Steuereinheit vorgegebene Niveau angepaßt werden soll, bis dieses erreicht ist. Dementsprechend ist unter dem Abbruch eines Ablassvorganges zu verstehen, daß ein weiteres Ablassen von Stellmittel aus den Stellgliedern der Niveauregelanlage unterbunden wird, obwohl das aktuelle Niveau des Fahrzeugaufbaus oberhalb des in der Steuereinheit vorgegebenen Niveaus liegt. Das aktuelle Niveau des Fahrzeugaufbaus wird vorzugsweise mittels eines oder mehrerer Höhensensoren bestimmt.

Der Grundgedanke der Erfindung ist darin zu sehen, daß nach Einleitung eines Ablassvorganges durch die Steuereinheit bereits nach einer kurzen Zeitspanne überprüft wird, ob sich der Fahrzeugaufbau gemäß einer Vorgabe aus dem ermittelten Niveau abgesenkt hat und die Steuereinheit den Ablassvorgang abbricht, wenn dies nicht der Fall ist.

Gemäß der Erfindung wird nach der Einleitung eines Ablassvorganges nur eine geringe Menge des Stellmittels aus dem Stellglied abgelassen. Die Menge des abgelassenen Stellmittels ist wesentlich geringer als die Menge des Stellmittels, die man aus dem Stellglied ablassen müßte, um den Fahrzeugaufbau aus dem vor dem Ablassvorgang ermittelten Niveau in das vorgegebene Niveau abzusenken. Der Vorteil der Erfindung ist darin zu sehen, daß bei der Überprüfung in der Steuereinheit, ob sich der Fahrzeugaufbau gemäß einer Vorgabe abgesenkt hat, die Menge des Stellmittels in dem Stellglied weitestgehend erhalten geblieben ist. Trotzdem kann die Steuereinheit entscheiden, ob der Fahrzeugaufbau auf dem Untergrund bzw. auf einer Hebebühne aufsitzt. Befindet sich das Kraftfahrzeug auf einer Hebebühne und wird es von dieser heruntergenommen, so sinkt es nicht oder nur unwesentlich gegenüber dem Niveau, das es vor dem Anheben durch die Hebebühne gehabt hat, ab, so daß keine bzw. nur eine geringe Korrektur des Niveaus des Fahrzeugaufbaus erforderlich ist. Ein langer Anhebevorgang entfällt somit (im Gegensatz dazu werden bei herkömmlichen Niveauregelanlagen die Stellglieder weitestgehend entleert, so daß ein langer Anhebevorgang des Fahrzeugaufbaus notwendig ist, wenn das Kraftfahrzeug von der Hebebühne heruntergenommen wird).

Gemäß einer Weiterbildung der Erfindung nach Anspruch 2 bricht die Steuereinheit den Ablassvorgang auch dann ab, wenn sich der Fahrzeugaufbau nach Einleitung des Ablassvorganges gemäß einer Vorgabe abgesenkt hat, sich aber nach Einleitung des Ablassvorganges der Stellmitteldruck bzw. mindestens eine Radaufstandskraft über ein vorgegebenes Maß hinaus reduziert hat. Anhand der Reduzierung des Stellmitteldruckes bzw. der Radaufstandskraft stellt die Steuereinheit fest, daß das Fahrzeug während des Ablassvorganges z. B. auf dem Untergrund aufgesetzt-hat Der Vorteil der Weiterbildung ist darin zu sehen, daß in diesem Fall der Ablassvorgang abgebrochen wird, so daß ein verstärktes Aufsitzen des Fahrzeuges auf dem Untergrund unterbunden wird.

Der Vorteil der Weiterbildung nach Anspruch 3 ist darin zu sehen, daß bereits nach einer kurzen Zeitspanne (typischerweise weisen die Zeitintervalle eine Länge von 1 bis 5 Sekunden auf) festgestellt werden kann, ob sich der Fahrzeugaufbau überhaupt während eines Zeitintervalls abgesenkt hat oder evtl. sogar angehoben wird. Mit Hilfe dieser Weiterbildung kann während eines Ablassvorganges schnell festgestellt werden, daß das Fahrzeug mit einem Wagenheber oder einer Hebebühne angehoben wird. Durch die Weiterbildung der Vorteil erreicht, daß eine maximal mögliche Menge des Stellmittels in den Stellgliedern der Niveauregelanlage verbleibt.

Der Vorteil der Weiterbildung nach Anspruch 4 wird verständlich, wenn man folgendes bedenkt: In einer Niveauregelanlage, in der das Niveau des Fahrzeugaufbaus durch Ablassen eines Stellmittels aus Stellgliedern abgesenkt wird, ist im Maximalniveau des Fahrzeugaufbaus der Zusammenhang zwischen der Menge des Stellmittels in den Stellgliedern und dem Niveau des Fahrzeugaufbaus nicht eindeutig. So kann z.B. der Fall auftreten, daß ein beladenes Fahrzeug entladen wird und durch die Entladung in einen eingebauten Anschlag einfedert und so in das Maximalniveau übergeht. Wird in diesem Fall Stellmittel aus den Stellgliedern abgelassen, so senkt sich das Niveau des Fahrzeugaufbaus nach Einleitung des Ablassvorganges nicht unmittelbar aus dem Maximalniveau ab. Vielmehr sinkt der Fahrzeugaufbau erst nach einer gewissen Zeitspanne ab, wenn so viel Stellmittel aus den Stellgliedern abgelassen worden ist, daß bei dem geringen Fahrzeuggewicht der Fahrzeugaufbau aus dem Maximalniveau absinkt. Im Gegensatz dazu besteht für ein Niveau, welches unterhalb des Maximalniveaus und oberhalb eines vorgegebenen Sollniveaus liegt, dieses Problem nicht, so daß sich der Fahrzeugaufbau sofort nach Einleitung des Ablassvorganges absenkt (es sei denn, das Fahrzeug wird während des Ablassvorganges entladen oder angehoben). Durch die Weiterbildung wird also der Vorteil erreicht, daß nur dann, wenn sich der Fahrzeugaufbau vor dem Ablassvorgang in oder nahe dem Maximalniveau befindet, der Ablassvorgang über zumindest eine Zeitspanne durchgeführt wird, die notwendig ist, um eindeutig beurteilen zu können, ob sich der Fahrzeugaufbau aus dem aktuellen Niveau hätte absenken müssen. Befindet sich der Fahrzeugaufbau unterhalb des Maximalniveaus, so kann unmittelbar nach Einleitung des Ablassvorganges beurteilt werden, ob sich der Fahrzeugaufbau absenkt. Dementsprechend bleibt in allen möglichen Niveaus des Fahrzeugaufbaus die maximal mögliche Menge des Stellmittels in den Stellgliedern der Niveauregelanlage vorhanden.

Von der Weiterbildung nach Anspruch 5 wird bevorzugt dann Gebrauch gemacht, wenn das vor dem Ablassvorgang aktuelle ermittelte Niveau unterhalb des Maximalniveaus liegt. In diesem Fall senkt sich der Fahrzeugaufbau in jedem Zeitintervall bei gleichbleibenden Radaufstandskräften bereits um ein vorgegebenes Maß ab, es sei denn, das Kraftfahrzeug befindet sich in einer kritischen Situation oder wird entladen. Der Vorteil dieser Weiterbildung ist darin zu sehen, daß in der Steuereinheit eine kritische Situation von einer Entladung des Kraftfahrzeuges während eines Ablassvorganges unterschieden werden kann.

Gemäß einer Weiterbildung der Erfindung nach Anspruch 6 enthält die Niveauregelanlage mindestens eine Luftfeder, mit der der Fahrzeugaufbau federnd gelagert ist, wobei während eines Ablassvorganges Druckluft aus der Luftfeder abgelassen wird.

Gemäß einer Weiterbildung der Erfindung nach Anspruch 7 werden in einer derartigen Niveauregelanlage folgende Verfahrensschritte durchgeführt:
- aus der Luftfeder wird maximal über eine Zeitspanne Luft abgelassen (wenn der Fahrzeugaufbau vor Ablauf der Zeitspanne das Sollniveau erreicht, wird der Ablassvorgang sofort abgebrochen), bis in der Luftfeder ein minimaler Luftdruck unterschritten ist, der so vorgegeben ist, daß sich der Fahrzeugaufbau auch bei fehlender Zuladung gemäß der Vorgabe aus dem ermittelten Niveau absenken müßte, und daß
- während der Zeitspanne überprüft wird, ob sich der Fahrzeugaufbau aus dem ermittelten Niveau gemäß der Vorgabe absenkt, und daß
- die Steuereinheit den Ablassvorgang abbricht, wenn dies bis zum Ende der Zeitspanne nicht der Fall ist.

Wenn nach der Zeitspanne der Luftdruck so niedrig ist, daß auch der genannte minimale Luftdruck unterschritten ist und das Kraftfahrzeug sich nicht gemäß der Vorgabe abgesenkt hat, so ist dies ein Anzeichen dafür, daß sich das Kraftfahrzeug in einer kritischen Situation befindet.

Der Vorteil der Weiterbildung nach Anspruch 8 ist darin zu sehen, daß das Verfahren auch ohne einen Drucksensor durchgeführt werden kann. So kann der maximale Luftdruck, bei dem der Fahrzeugaufbau auch bei maximaler Zuladung das unmittelbar vor dem Ablassvorgang ermittelte Niveau einnimmt, aus einem Kennfeld bestimmt werden. Das gleiche gilt für den minimalen Luftdruck bei minimaler Zuladung. Die Zeitspanne wird aus den ungünstigsten Vorgaben bestimmt, sie entspricht nämlich der Zeitspanne, die benötigt wird, um den Druck, der bei maximaler Beladung vorhanden ist, auf ein Druckniveau abzusenken, das bei minimaler Beladung vorliegt. Da diese Druckwerte für ein Serienfahrzeug fest vorgegeben sind, kann mit Hilfe von Kennfeldern oder mathematischer Modellbildung daraus die maximale Zeitdauer für das jeweilie Niveau bestimmt werden.

Gemäß einer Weiterbildung der Erfindung nach Anspruch 9 wird das Verfahren nur dann durchgeführt, wenn die Geschwindigkeit des Kraftfahrzeuges einen vorgegebenen Wert unterschreitet. Dieser Weiterbildung liegt der Gedanke zugrunde, daß sich ein Kraftfahrzeug typischerweise nur dann in einer kritischen Situation befindet, wenn es eine niedrige Geschwindigkeit hat. Vorzugsweise wird das Verfahren nur dann durchgeführt, wenn die Geschwindigkeit des Kraftfahrzeuges unterhalb von 5 km/h liegt. Der Vorteil der Weiterbildung ist darin zu sehen, daß das Verfahren nur dann durchgeführt wird, wenn das Kraftfahrzeug aufgrund seiner niedrigen Geschwindigkeit in einer kritischen Situation sein kann. Absenkvorgänge oberhalb der Grenzgeschwindigkeit werden ununterbrochen durchgeführt.

Gemäß einer Weiterbildung der Erfindung nach Anspruch 10 kann nach einem Abbruch eines Ablassvorganges bei ausgeschaltetem Motor des Kraftfahrzeuges eine von einer Person eingeleitete Niveauänderung (z. B. durch Betätigung einer Taste) des Fahrzeugaufbaus erst nach dem Einschalten des Motors vorgenommen werden. Der Vorteil dieser Weiterbildung ist darin zu sehen, daß, wenn das Fahrzeug mit Hilfe eines Wagenhebers oder einer Hebebühne angehoben wird, verhindert wird, daß durch Unwissenheit oder Unachtsamkeit manuell ein Niveauwechsel des Systems vorgegeben wird und das Fahrzeug sich daraufhin von den Haltern des Wagenhebers oder der Hebebühne löst.

Gemäß einer Weiterbildung der Erfindung nach Anspruch 11 kann nach einem Abbruch eines Ablassvorganges bei eingeschaltetem Motor des Kraftfahrzeuges vorübergehend ausschließlich ein Anhebevorgang des Fahrzeugaufbaus eingeleitet werden. Der Abbruch eines Ablassvorganges geschieht in den meisten Fällen dann bei eingeschaltetem Motor, wenn das Kraftfahrzeug auf dem Untergrund aufsitzt. Durch die Weiterbildung wird dementsprechend der Vorteil erreicht, daß ein unbeabsichtigtes weiteres Absenken und somit verstärktes Aufsitzen des Kraftfahrzeuges auf dem Untergrund unterbunden wird.

Gemäß einer Weiterbildung der Erfindung nach Anspruch 12 kann ein Ablassvorgang des Fahrzeugaufbaus erst dann wieder eingeleitet werden, wenn die Geschwindigkeit des Kraftfahrzeuges einen Grenzwert überschreitet oder wenn nach dem Ausschalten der Zündung ein erneutes Einschalten der Zündung erfolgt. Vorzugsweise liegt der Grenzwert für die Geschwindigkeit bei 5 km/h. Der Vorteil dieser Weiterbildung ist darin zu sehen, daß ein Ablassvorgang des Fahrzeugaufbaus erst dann wieder eingeleitet werden kann, wenn mit hoher Wahrscheinlichkeit feststeht, daß das Kraftfahrzeug aufgrund seiner Geschwindigkeit nicht mehr auf dem Untergrund aufsitzt.

Gemäß einer Weiterbildung der Erfindung nach Anspruch 13 befindet sich zusätzlich das aktuell ermittelte Niveau unterhalb des Maximalniveaus. Der Vorteil dieser Weiterbildung ist darin zu sehen, daß, wenn die Fahrzeuggeschwindigkeit von den Antriebsrädern abgeleitet wird, auf einer Hebebühne bei laufendem Motor und drehenden Antriebsrädern kein Ablassvorgang eingeleitet wird.

Ausführungsbeispiel und weitere Vorteile der Erfindung werden im Zusammenhang mit den nachstehenden Figuren erläutert, darin zeigt:
- Figur 1: eine Niveauregeleinrichtung in schematischer Darstellung,
- Figur 2: ein Flussdiagramm,
- Figur 3: ein Flussdiagramm,
- Figur 4: ein Diagramm,
- Figur 5: ein Flussdiagramm.

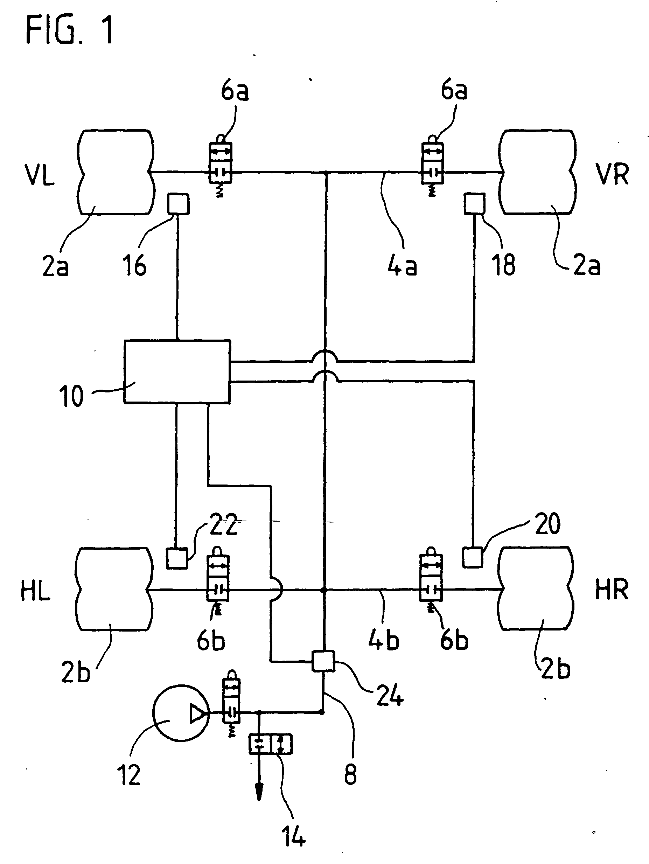

Figur 1 zeigt in stark schematisierter Darstellung eine Niveauregelanlage für ein Kraftfahrzeug, wobei nur die für die nachfolgenden Erläuterungen notwendigen Bestandteile gezeigt sind. Derartige Niveauregelanlagen sind an sich bekannt, so daß sie hier nur kurz erläutert werden sollen. Die Niveauregelanlage verfügt über Luftfedern 2a, die der Vorderachse des Kraftfahrzeuges zugeordnet sind, und über Luftfedern 2b, die der Hinterachse des Kraftfahrzeuges zugeordnet sind. Mit den Luftfedern 2a, 2b ist ein (nicht gezeigter) Fahrzeugaufbau des Kraftfahrzeuges federnd gelagert. Die Luftfedern 2a stehen über eine Querleitung 4a und die Luftfedern 2b stehen über eine Querleitung 4b miteinander in Verbindung. Jede Querleitung 4a, 4b enthält jeweils zwei Quersperrventile 6a, 6b, von denen jeweils eins einer Luftfeder 2a, 2b zugeordnet ist. Darüber hinaus stehen die Querleitungen 4a, 4b mit einer weiteren Leitung 8 in Verbindung, über die die Luftfedern 2a, 2b mit Druckluft befüllt bzw. über die Druckluft aus den Luftfedern 2a, 2b abgelassen wird.

Zum Auffüllen der Luftfedern 2a, 2b werden die Quersperrventile 6a, 6b und das Ventil 32 von der Steuereinheit 10 der Niveauregelanlage angesteuert, so daß sie von dem in der Figur 1 gezeigten Grundzustand in ihren anderen Schaltzustand übergehen und die Querleitungen 4a und 4b "durchschalten". Daraufhin wird der Kompressor 12 von der Steuereinheit 10 angesteuert, so daß dieser Druckluft in die Luftfedern 2a, 2b fördert. Zum Abbruch des Auffüllvorganges wird der Kompressor 12 von der Steuereinheit 10 gestoppt und die Quersperrventile 6a, 6b und das Ventil 32 werden von der Steuereinheit 10 angesteuert, so daß sie den in der Figur 1 gezeigten Grundzustand einnehmen.

Zum Ablassen von Druckluft aus den Luftfedern 2a, 2b werden von der Steuereinheit 10 die Quersperrventile 6a, 6b angesteuert, so daß sie von dem in der Figur 1 gezeigten Grundzustand in den geöffneten Schaltzustand übergehen. Darüber hinaus wird von der Steuereinheit 10 das Ablaßventil 14 angesteuert, so daß dieses von dem in der Figur 1 gezeigten Grundzsutand in den geöffneten Schaltzustand übergeht, in dem es die Leitung 8 mit der Atmosphäre verbindet. Die Luftfedern 2a, 2b sind dann über die Quersperrleitungen 4a, 4b und über die Leitung 8 mit der Atmosphäre verbunden, so daß Druckluft aus ihnen abgelassen wird. Um einen Ablaßvorgang zu beenden bzw. abzubrechen, werden die Quersperrventile 6a, 6b und das Ablaßventil 14 von der Steuereinheit 10 geschlossen, so daß diese dann wieder in den in der Figur 1 gezeigten Grundzustand übergehen.

Aufgrund unterschiedlicher Achslasten und infolgedessen unterschiedlichem Druck in den Luftfedern erfolgt das Auffüllen bzw. Ablassen bevorzugt achsweise.

Durch entsprechende Ansteuerung der Quersperrventile 6a, 6b und des Ablaßventils 14 ist es ebenfalls möglich, Druckluft aus einer Luftfeder bzw. aus einer beliebigen Kombination von Luftfedern (beispielsweise den Luftfedern, die einer Achse zugeordnet sind) abzulassen. Um Druckluft aus der Luftfeder 2b, die der Radposition "hinten links" zugeordnet ist, abzulassen, muß beispielsweise das dieser Luftfeder 2b zugeordnete Quersperrventil 6b und das Ablaßventil 14 von dem in der Figur 1 gezeigten Grundzustand in den geöffneten Schaltzustand überführt werden. Soll zusätzlich Luft aus der Luftfeder 2b, die der Radposition "hinten rechts" zugeordnet ist, so muß zusätzlich das dieser Luftfeder 2b zugeordnete Quersperrventil 6b von dem in der Figur 1 gezeigten Grundzustand in den anderen Schaltzustand überführt werden.

Über die bisher genannten Bestandteile hinaus verfügt die Niveauregelanlage über Höhensensoren 16, 18, 20 und 22, von denen jeweils einer einer Luftfeder 2a, 2b der Niveauregelanlage zugeordnet ist. Mit Hilfe des Höhensensors 16 kann jederzeit das aktuelle Niveau des Fahrzeugaufbaus im Bereich der Radposition "vorne links" gegenüber einem Bezugspunkt gemessen werden. Entsprechendes gilt für die Höhensensoren 18, 20 und 22. Das von den Höhensensoren 16, 18, 20 und 22 gemessene aktuelle Niveau wird von diesen an die Steuereinheit 10 der Niveauregelanlage übermittelt und dort ausgewertet. In der Steuereinheit 10 sind also zu jedem Zeitpunkt Informationen darüber verfügbar, welches aktuelle Niveau der Fahrzeugaufbau im Bereich der Radpositionen des Kraftfahrzeuges gegenüber einem vorgegebenen Bezugspunkt einnimmt. Darüber hinaus kann in der Steuereinheit 10 ermittelt werden, welches aktuelle Niveau der Fahrzeugaufbau gegenüber einer Achse des Kraftfahrzeuges im Mittel einnimmt, indem die Meßwerte der entsprechenden Höhensensoren gemittelt werden. Soll beispielsweise das Niveau des Fahrzeugaufbaus gegenüber der Hinterachse bestimmt werden, so werden in der Steuereinheit 10 die Meßwerte gemittelt, die von den Höhensensoren 20 und 22 an die Steuereinheit 10 übermittelt worden sind.

In der Steuereinheit 10 wird laufend überprüft, ob das aktuelle Niveau des Fahrzeugaufbaus im Bereich einer Radposition bzw. das aktuelle Niveau des Fahrzeugaufbaus gegenüber einer Achse des Kraftfahrzeuges mit einem vorgegebenen, in der Steuereinheit 10 gespeicherten Niveau übereinstimmt (als aktuelles Niveau wird das zuletzt in der Steuereinheit 10 anhand der von den Höhensensoren 16, 18, 20 und 22 übermittelten Meßsignale verstanden). Liegt das aktuelle Niveau oberhalb des in der Steuereinheit 10 gespeicherten vorgegebenen Niveaus, so leitet die Steuereinheit 10 einen Ablassvorgang ein. Dazu werden die entsprechenden Quersperrventile 6a, 6b und das Ablaßventil 14, wie oben bereits erläutert, geschaltet. Der Ablassvorgang ist beendet, wenn die Steuereinheit 10 feststellt, daß das aktuelle Niveau dem in der Steuereinheit 10 gespeicherten vorgegebenen Niveau entspricht. Die Steuereinheit 10 führt dann die entsprechenden Quersperrventile 6a, 6b und das Ablaßventil 14 wieder in den in der Figur 1 gezeigten Grundzustand über.

Es kann auch vorkommen, daß die Steuereinheit 10 feststellt, daß sich das Niveau des Fahrzeugaufbaus während eines Ablassvorganges nicht wie erwartet absenkt, weil sich das Kraftfahrzeug in einer kritischen Situation befindet. In diesem Fall bricht die Steuereinheit 10 den Ablassvorgang ab, wie dies weiter unten im einzelnen erläutert wird.

Die Niveauregelanlage enthält gegebenenfalls schließlich einen Drucksensor 24, mit dem der Luftdruck in jeder einzelnen Luftfeder 2a, 2b der Niveauregelanlage meßbar ist. Zur Messung des Luftdruckes in der Luftfeder 2b, die der Radposition "hinten links" zugeordnet ist, wird das dieser Luftfeder 2b zugeordnete Quersperrventil 6b von dem in der Figur 1 gezeigten Grundzustand durch die Steuereinheit in den anderen Schaltzustand überführt, wohingegen alle anderen Ventile der Niveauregelanlage in dem in der Figur 1 gezeigten Grundzustand bleiben. In diesem Fall liegt an dem Drucksensor 24 der in der Luftfeder 2b, die der Radposition am "hinten links" zugeordnet ist, herrschende statische Luftdruck an. Entsprechend ist der Luftdruck in den anderen Luftfedern der Niveauregelanlage meßbar. Das jeweilige Meßergebnis des Drucksensors 24 wird an die Steuereinheit 10 übermittelt. Das übermittelte Meßergebnis wird in der Steuereinheit der Luftfeder zugeordnet, deren Quersperrventil sie angesteuert hat, und ausgewertet. Wie dies im einzelnen erfolgt, wird weiter unten näher erläutert.

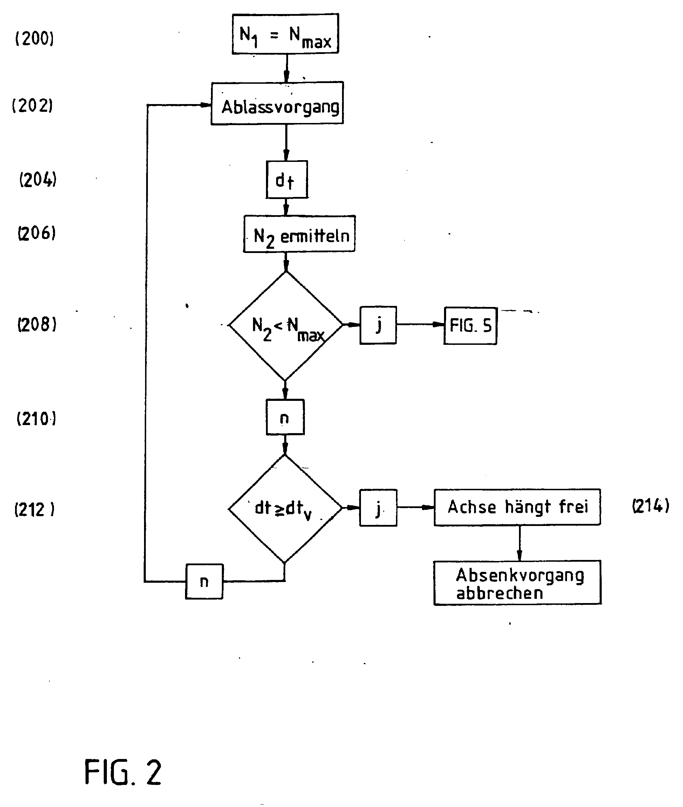

Im Zusammenhang mit Figur 2 wird im folgenden erläutert, wie ein Ablassvorgang mit Hilfe der in der Figur 1 gezeigten Steuereinheit 10 durchgeführt wird, wenn sich der Fahrzeugaufbau des Kraftfahrzeuges gegenüber eine Achse im bzw. nahe dem maximalen Niveau Nₘₐₓ befindet. Hierbei wird beispielhaft davon ausgegangen, daß sich der Fahrzeugaufbau gegenüber der Hinterradachse im maximalen Niveau Nₘₐₓ befindet. Zunächst stellt die Steuereinheit 10 anhand der Signale der Höhensensoren 20 und 22 fest, daß das aktuelle Niveau N₁ unmittelbar vor dem Ablassvorgang dem maximalen Niveau Nₘₐₓ entspricht und somit über dem vorgegebenen Niveau für den Fahrzeugaufbau gegenüber der Hinterradachse liegt. Die Steuereinheit 10 leitet dann einen Ablassvorgang ein, indem sie Druckluft aus den Luftfedern 2b abläßt (dazu steuert sie die in der Figur 1 gezeigten Ventile wie oben beschrieben). Bei der Einleitung des Ablassvorganges geht die Steuereinheit 10 davon aus, daß der Luftdruck in den Luftfedern 2b dem Luftdruck Pₘₐₓ bei maximaler Beladung entspricht (siehe Schritt 202). Dies wird bei der Berechnung der maximalen Ablaßzeit berücksichtigt (s. u.).

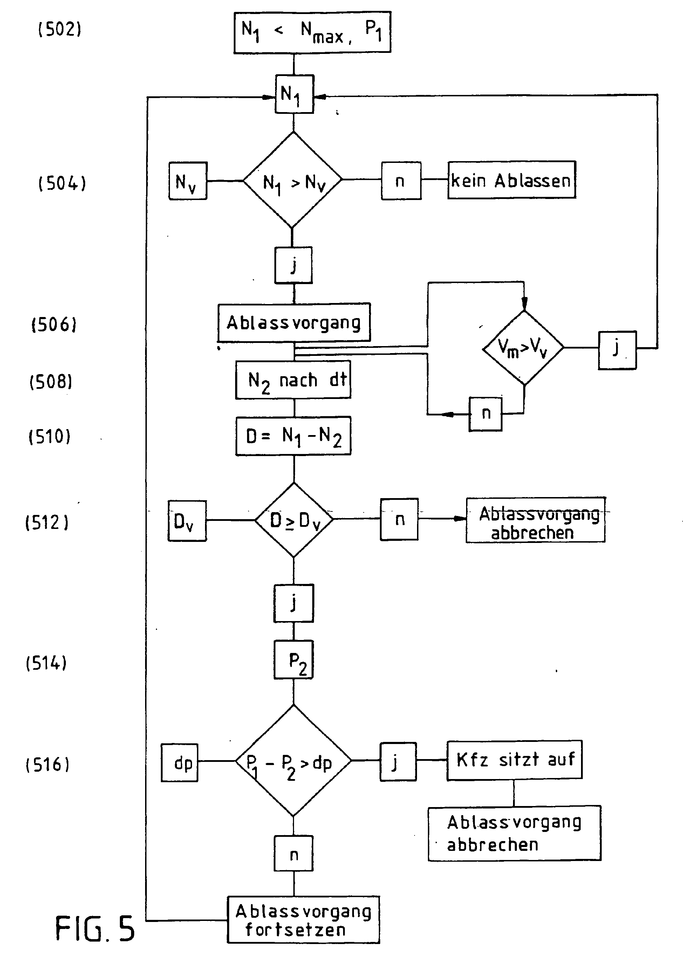

Nach einer Zeitspanne dt wird mit Hilfe der Höhensensoren 20 und 22 in der Steuereinheit 10 die aktuelle Höhe N₂ des Fahrzeugaufbaus gegenüber der Hinterachse ermittelt und mit dem maximalen Niveau Nₘₐₓ verglichen (siehe Schritt 204, 206). Ist nach der Zeitspanne dt das aktuelle Niveau N₂ kleiner als das Niveau Nₘₐₓ, hat sich der Fahrzeugaufbau des Kraftfahrzeuges also abgesenkt, wird der Ablassvorgang so fortgesetzt wie es im Zusammenhang mit der Figur 5 beschrieben wird.

Ist nach der Zeitspanne dt das aktuelle Niveau N₂ nicht kleiner als Nₘₐₓ, hat sich der Fahrzeugaufbau also nicht abgesenkt, so wird der Ablassvorgang gemäß der in Fig. 2 gezeigten Routine fortgesetzt (s. Schritt 208).

Wenn sich aufgrund des Ablassvorganges das aktuelle Niveau des Fahrzeugaufbaus nicht ändert, wird der Ablassvorgang maximal solange fortgesetzt, bis die Zeitspanne dt des gesamten Ablassvorganges einer vorgegebenen Zeitspanne dtᵥ entspricht. Die Zeitspanne dtᵥ ist so vorgegeben, daß innerhalb dieser Zeitspanne der Luftdruck aufgrund des Ablassens von Druckluft in den Luftfedern 2b von dem Maximaldruck Pₘₐₓ bis unter einen minimalen Luftdruck Pₘᵢₙ abgefallen ist. Hierbei ist der Luftdruck Pₘᵢₙ in der Steuereinheit 10 so vorgegeben, daß sich bei diesem Luftdruck in den Luftfedern 2b der Fahrzeugaufbau des Kraftfahrzeuges auch bei minimaler bzw. fehlender Zuladung aus dem maximalen Niveau Nₘₐₓ absenken müßte (siehe Schritt 212).

Ist das aktuelle Niveau N₂, das der Fahrzeugaufbau nach der Zeitspanne dtᵥ einnimmt, nicht kleiner als das maximale Niveau Nₘₐₓ, hat sich der Fahrzeugaufbau des Kraftfahrzeuges nicht abgesenkt. Die Steuereinheit 10 folgert daraus, daß die Achse frei in der Luft hängt (z.B. weil sich das Kraftfahrzeug auf einer Hebebühne befindet) und bricht den Ablassvorgang ab.

Das in dem Zusammenhang mit der Figur 2 erläuterte Verfahren kann durchgeführt werden, ohne den Luftdruck in den Luftfedern messen zu müssen. Auf den in der Figur 1 gezeigten Drucksensor 24 kann demzufolge in diesem Fall verzichtet werden. Darüber hinaus kann die Zeitspanne dtᵥ, über die während eines Ablassvorganges Luft aus den Luftfedern abgelassen werden muß, wenn sich aufgrund des Ablassvorganges das aktuelle Niveau des Fahrzeugaufbaus nicht ändert, in der Steuereinheit 10 fest vorgegeben werden, da sowohl der Maximaldruck Pₘₐₓ als auch der Minimaldruck Pₘᵢₙ und die Zeit, in der sich der Luftdruck von Pₘₐₓ auf Pₘᵢₙ absenkt, unveränderliche Größen sind, die einmal festgelegt werden können.

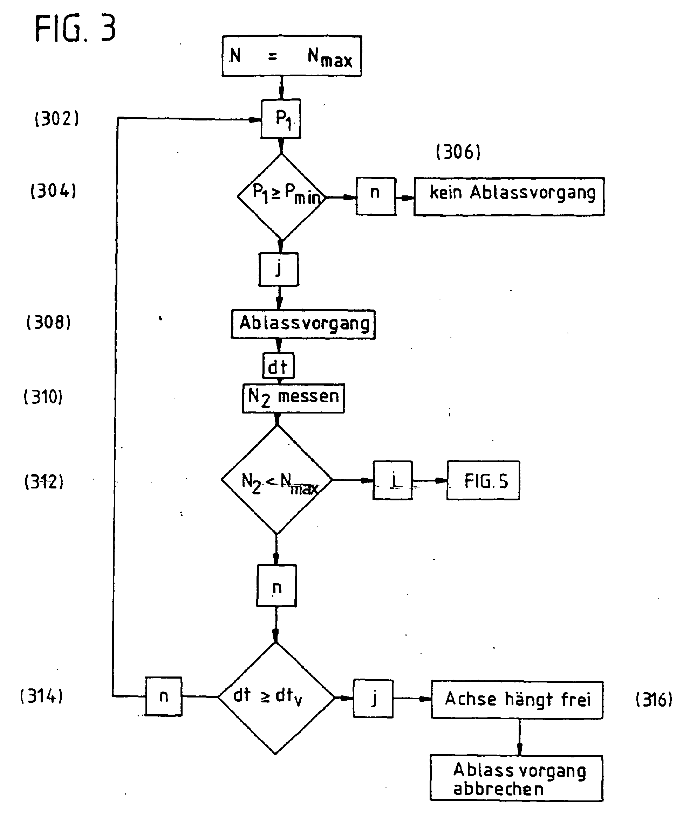

Im Zusammenhang mit Figur 3 wird im folgenden erläutert, wie ein Ablassvorgang bevorzugt vorgenommen wird, wenn die Niveauregelanlage zusätzlich über den in der Figur 1 gezeigten Drucksensor 24 verfügt. Hierbei wird wiederum davon ausgegangen, daß sich der Fahrzeugaufbau des Kraftfahrzeuges gegenüber der Hinterachse im maximalen Niveau Nₘₐₓ befindet (was von der Steuereinheit 10 wiederum anhand der Signale der Höhensensoren 20 und 22 festgestellt wird). Zunächst wird mit Hilfe des Drucksensors 24 der Druck in den Luftfedern 2b gemessen, wie es im Zusammenhang mit der Figur 1 beschrieben worden ist. Der gemessene Luftdruck P₁ in den Luftfedern wird mit dem minimalen Luftdruck Pₘᵢₙ verglichen (siehe Schritt 302, 304). Der Luftdruck Pₘᵢₙ ist in der Steuereinheit 10 gespeichert (vorzugsweise für Vorder- und Hinterachse unterschiedliche Werte) und entspricht dem Luftdruck in den Luftfedern 2b, bei dessen Unterschreitung sich der Fahrzeugaufbau des Kraftfahrzeuges auch bei minimaler bzw. fehlender Zuladung aus dem maximalen Niveau Nₘₐₓ absenken müßte. Ergibt der Vergleich, daß der aktuelle Luftdruck P₁ vor dem Ablassvorgang in den Luftfedern kleiner als der minimale Luftdruck Pₘᵢₙ ist, so folgert die Steuereinheit 10 daraus, daß die Hinterachse des Kraftfahrzeuges frei in der Luft hängt, weil der Fahrzeugaufbau des Kraftfahrzeuges ansonsten nicht das maximale Niveau Nₘₐₓ gegenüber der Hinterachse einnehmen könnte. Aus diesem Grunde leitet die Steuereinheit keinen Ablassvorgang ein. Ergibt der Vergleich hingegen, daß der aktuelle Luftdruck P₁ urtmittelbar vor dem Ablassvorgang größer oder gleich dem minimalen Luftdruck Pₘᵢₙ ist, so wird ein Ablassvorgang eingeleitet. Dies geschieht durch Ablassen von Druckluft aus den Luftfedern 2b, wie es bereits im Zusammenhang mit der Figur 1 und 2 erläutert worden ist (siehe Schritt 306, 308).

Während einer Zeitspanne dt wird in der Steuereinheit 10 das aktuelle Niveau N₂ anhand der Signale der Höhensensoren 20 und 22 ermittelt und mit dem maximalen Niveau Nₘₐₓ verglichen. In Abhängigkeit davon, wie dieser Vergleich ausfällt, wird mit der Steuerung genauso fortgefahren, wie es bereits im Zusammenhang mit der Figur 2 erläutert worden ist.

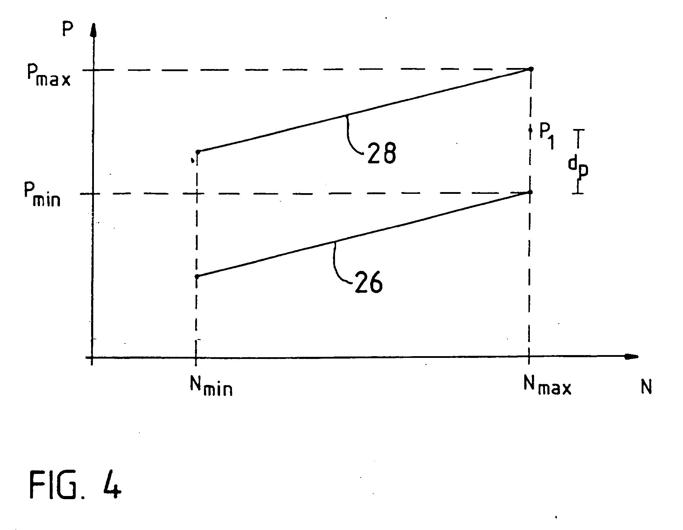

Wenn sich aufgrund des Ablassvorganges das aktuelle Niveau des Fahrzeugaufbaus nicht ändert, wird der Ablassvorgang maximal solange fortgesetzt, bis die Zeitspanne dt des gesamten Ablassvorganges einer vorgegebenen Zeitspanne dtᵥ entspricht. Die Zeitspanne dtᵥ ist so vorgegeben, daß sich innerhalb dieser Zeitspanne der Luftdruck in den Luftfedern 2b von dem Druck P₁ bis zu dem Luftdruck Pₘᵢₙ absenken müßte (wie die Zeitspanne dtᵥ in der Steuereinheit 10 bestimmt wird, wird im Zusammenhang mit der Figur 4 erläutert).

Das in dem Zusammenhang mit der Figur 3 beschriebene Verfahren hat gegenüber dem im Zusammenhang mit der Figur 2 beschriebenen Verfahren folgende Vorteile: Vor der Einleitung des Ablassvorganges wird anhand des Luftdruckes in den Luftfedern eine Plausibilitätsbetrachtung durchgeführt, ob die Einleitung eines Ablassvorganges überhaupt zu einer Absenkung des Fahrzeugaufbaus führen kann oder ob die Achse des Fahrzeuges frei in der Luft hängt. Diese Plausibilitätsbetrachtung muß nicht zwingend mit Hilfe des Luftdruckes erfolgen. Alternativ können beispielsweise in den Reifen des Kraftfahrzeuges Kraftsensoren eingebettet sein, die die Radaufstandsflächen der Räder messen. Zeigen diese Kraftsensoren keine Kraft an, so folgert die Steuereinheit 10 daraus, daß die entsprechenden Räder des Kraftfahrzeuges frei in der Luft hängen. Ein weiterer Vorteil des im Zusammenhang mit der Figur 3 beschriebenen Verfahrens ist darin zu sehen, daß die Zeitspanne dt, während der der Ablassvorgang maximal durchgeführt wird, gegenüber der Zeitspanne tab in dem Verfahren gemäß Figur 2 verkürzt ist, weil der Druck in den Luftfedern vor dem Ablassvorgang gemessen worden ist und nicht vorausgesetzt wird, daß dieser dem Maximalluftdruck Pₘₐₓ entspricht (in einigen wenigen Fällen können die Zeitspannen gleich lang sein, nämlich dann, wenn der gemessene Luftdruck dem maximalen Luftdruck Pₘₐₓ entspricht).

Figur 4 zeigt ein vereinfachtes Diagramm, in dem der Luftdruck P in den Luftfedern der Niveauregelanlage über dem Niveau N des Fahrzeugaufbaus aufgetragen ist. Der Fahrzeugaufbau kann sich zwischen dem minimalen Niveau Nₘᵢₙ und dem maximalen Niveau Nₘₐₓ bewegen. Der in den Luftfedern der Niveauregelanlage herrschende Luftdruck hängt für ein bestimmtes Niveau des Fahrzeugaufbaus zusätzlich von der Beladung des Fahrzeugaufbaus ab. Die Kennlinie 26 gibt den Verlauf des Luftdruckes in den Luftfedern in Abhängigkeit des Fahrzeugniveaus für eine minimale bzw. fehlende Zuladung des Fahrzeuges wieder, wohingegen die Kennlinie 28 den entsprechenden Zusammenhang für eine maximale Zuladung des Kraftfahrzeuges wiedergibt. Für ein vorgegebenes Niveau ist der Luftdruck in den Luftfedern bei maximaler Zuladung größer als bei minimaler bzw. fehlender Beladung des Fahrzeugaufbaus. Wird vor einem Ablassvorgang von der Steuereinheit das maximale Niveau Nₘₐₓ festgestellt (so wie es bei dem Verfahren gemäß der Figur 3 der Fall ist), so bewegt sich der Luftdruck P₁ in den Luftfedern zwischen dem Luftdruck Pₘᵢₙ, der bei minimaler Zuladung des Fahrzeugaufbaus vorliegt, und dem Luftdruck Pₘₐₓ, der bei maximaler Zuladung des Fahrzeugaufbaus vorliegt. Aus dem Abstand dp = p₁ - pₘᵢₙ kann die Steuereinheit 10 die Zeitspanne dt berechnen, die notwendig ist, um den Luftdruck P₁ in den Luftfedern auf den Wert Pₘᵢₙ abzusenken. Alternativ ist es möglich, daß in der Steuereinheit 10 für alle möglichen Werte von dp die entsprechenden Zeitspannen dt in einer Kennlinie gespeichert sind, so daß die Steuereinheit die Zeit dt direkt aus der Kennlinie bestimmen kann.

Im Zusammenhang mit der Figur 5 wird im folgenden erläutert, wie mit Hilfe der Steuereinheit 10 ein Ablassvorgang durchgeführt wird, wenn das unmittelbar vor dem Ablassvorgang oder während eines Ablassvorganges aus dem Niveau Nₘₐₓ ermittelte aktuelle Niveau N₁ kleiner als das maximale Niveau Nₘₐₓ des Fahrzeugaufbaus ist. Hierbei wird wiederum beispielhaft davon ausgegangen, daß ein Ablassvorgang an der Hinterachse des Fahrzeuges vorgenommen werden soll. Zunächst werden in der Steuereinheit 10 die Signale der Höhensensoren 20 und 22 ausgewertet. Wird dabei festgestellt, daß das aktuelle Niveau N₁ vor dem Ablassvorgang kleiner ist als das maximale Niveau Nₘₐₓ, so wird das aktuelle Niveau N₁ mit dem in der Steuereinheit 10 vorgegebenen Niveau Nᵥ verglichen. Die Steuereinheit 10 leitet einen Ablassvorgang nur dann ein bzw. setzt einen aus dem Niveau Nₘₐₓ begonnenen Ablassvorgang nur dann fort, wenn das aktuelle Niveau N₁ größer ist als das vorgegebene Niveau Nᵥ. Dies geschieht durch Ablassen von Druckluft aus den Luftfedern 2b, wie es bereits im Zusammenhang mit den Figuren 1 und 2 beschrieben worden ist. Unmittelbar vor Einleitung des Ablassvorganges wird mittels des Drucksensors 24 (siehe Figur 1) der Druck P₁ in den Luftfedern gemessen und an die Steuereinheit 10 weitergegeben (siehe Schritte 502, 504 und 506).

Nach einer Zeitspanne dt wird mit Hilfe der Höhensensoren 20 und 22 wiederum das aktuelle Niveau N₂ des Fahrzeugaufbaus gegenüber der Hinterachse des Kraftfahrzeuges gemessen. Entsprechende Signale werden an die Steuereinheit 10 weitergeleitet, die aus den Signalen das Niveau N₂ des Fahrzeugaufbaus gegenüber der Hinterachse bestimmt. Danach wird in der Steuereinheit 10 eine Differenz D = N₁ - N₂ bestimmt, die also ein Maß dafür ist, wie stark sich der Fahrzeugaufbau in der Zeitspanne dt nach Einleitung des Ablassvorganges abgesenkt hat (siehe Schritte 508 und 510).

Das so bestimmte Maß D wird mit einem in der Steuereinheit 10 bestimmten Maß Dᵥ verglichen. Das Maß Dᵥ wird aus Konstruktionsdaten wie Ablassquerschnitt, Luftfedervolumen, Fahrzeuggewicht etc. bestimmt und gibt wieder, wie der Fahrzeugaufbau sich aus dem unmittelbar vor dem Ablassvorgang aktuellen Niveau N₁ innerhalb der Zeitspanne dt nach Einleitung des Ablassvorganges absenken müßte, wenn sich das Kraftfahrzeug nicht in einer kritischen Situation befindet. Ist der Fahrzeugaufbau in der Zeitspanne dt mindestens um dieses Maß Dᵥ abgesunken, ist also D größer oder gleich Dᵥ, so wird der Ablassvorgang fortgesetzt und mit Hilfe des Drucksensors 24 der aktuelle Luftdruck P₂ in den Luftfedern 2b bestimmt (siehe Schritte 512 und 514).

Daraufhin wird in der Steuereinheit 10 die Differenz P₁ - P₂ der Druckwerte gebildet. Anhand der Differenz wird in der Steuereinheit 10 überprüft, wie stark der Druck P₁ innerhalb der Zeitspanne dt abgefallen ist. Ist die Druckdifferenz größer als eine vorgegebene Druckdifferenz dp, die z. B. aus der Steigung der Kennlinie in Fig. 4 abgeleitet wird, so folgert die Steuereinheit 10 daraus, daß der Fahrzeugaufbau im Bereich der Hinterachse des Kraftfahrzeuges aufsitzt. In diesem Fall wird von der Steuereinheit 10 der Ablassvorgang abgebrochen. Ist der Druck P₁ hingegen nicht über das vorgegebene Maß dp hinaus abgefallen, so wird der Ablassvorgang fortgesetzt (siehe Schritt 502).

Unmittelbar nach Einleitung des Ablassvorganges (siehe Schritt 506 in Figur 5) kann die aktuelle Geschwindigkeit v_{M} des Kraftfahrzeuges gemessen und in der Steuereinheit 10 mit einer vorgegebenen Geschwindigkeit Vᵥ verglichen werden. Ist die aktuelle Geschwindigkeit v_{M} des Kraftfahrzeuges größer als die vorgegebene Geschwindigkeit, erfolgt keine Überprüfung des Ablassvorganges gemäß der Schritte 506 bis 516 in der Steuereinheit 10. Vielmehr wird mit den Höhensensoren 20 und 22 lediglich das aktuelle Niveau des Fahrzeugaufbaus überwacht und der Ablassvorgang solange fortgesetzt, bis diese das vorgegebene Niveau erreicht.

Eine Überprüfung des Ablassvorganges gemäß der Schritte 506 bis 516 erfolgt in der Steuereinheit nur dann, wenn die aktuelle Geschwindigkeit des Fahrzeuges kleiner als die vorgegebene Geschwindigkeit v_{M} ist.

Wird nach der Zeitspanne dt das aktuelle Niveau N₂ des Fahrzeugaufbaus gemessen und ist dieses größer als das Niveau N₁ (was der Fall ist, wenn der Fahrzeugaufbau während des Ablassvorganges angehoben wird) unmittelbar vor dem Ablassvorgang, so wird D kleiner als Dᵥ, was zu einem Abbruch des Ablassvorganges führt (in diesem Fall wird D nämlich negativ und Dᵥ ist positiv).

Für die Geschwindigkeit v_{M} wird vorzugsweise 5 km/h in der Steuereinheit 10 vorgegeben.

### Bezugszeichenliste

- 2a, 2b: Luftfedern
- 4a, 4b: Querleitung
- 6a, 6b: Quersperrventile
- 8: Leitung
- 10: Steuereinheit
- 12: Kompressor
- 14: Ablaßventil
- 16, 18, 20 22: Höhensensoren
- 24: Drucksensor
- 26, 28, 30: Kennlinie

## Patentansprüche

1. Verfahren zur Steuerung oder Regelung des Niveaus eines Fahrzeugaufbaus eines Kraftfahrzeuges mittels einer Niveauregelanlage mit Stellgliedern (2a; 2b), mit denen das Niveau des Fahrzeugaufbaus durch Ablassen eines Stellmittels aus den Stellgliedern (2a, 2b) absenkbar ist und mit einer Steuereinheit (10) in folgenden Verfahrensschritten:
- das Niveau des Fahrzeugaufbaus gegenüber einem Bezugspunkt wird ermittelt,
- es wird ein Ablassvorgang des Fahrzeugaufbaus eingeleitet, wenn das ermittelte Niveau über einem vorgegebenen Niveau liegt,
**dadurch gekennzeichnet,**
**dass** nach Einleitung des Ablassvorganges in der Steuereinheit (10) überprüft wird, ob sich der Fahrzeugaufbau gemäß einer Vorgabe aus dem unmittelbar vor dem Ablassvorgang ermittelten Niveau abgesenkt hat, **dadurch**, dass
- eine geringe Menge des Stellmittels aus einem Stellglied abgelassen wird, die wesentlich geringer ist als die Menge des Stellmittels, die man aus dem Stellglied ablassen müsste, um den Fahrzeugaufbau aus dem vor dem Ablassvorgang ermittelten Niveau in das vorgegebene Niveau abzusenken,
- in der Steuereinheit (10) überprüft wird, ob sich der Fahrzeugaufbau gegenüber dem unmittelbar vor dem Ablassvorgang ermittelten Niveau abgesenkt hat, und dass
- die Steuereinheit (10) den Ablassvorgang abbricht, wenn dies nicht der Fall ist.

2. Verfahren nach Anspruch 1, **dadurch gekennzeichnet, daß** der Stellmitteldruck oder die Radaufstandskräfte erfasst werden und die Steuereinheit (10) einen Ablassvorgang auch dann abbricht, wenn sich der Fahrzeugaufbau nach einer Zeitspanne abgesenkt hat, sich aber der Stellmitteldruck oder mindestens eine Radaufstandskraft über ein vorgegebenes Maß hinaus reduziert hat.

3. Verfahren nach einem der Ansprüche 1 bis 2, **dadurch gekennzeichnet, daß**
- die Zeitspanne in Zeitintervalle unterteilt wird, und eine Überprüfung stattfindet, ob sich der Fahrzeugaufbau während eines Zeitintervalls gegenüber dem unmittelbar vor dem Ablassvorgang ermittelten Niveau abgesenkt, und
- die Steuereinheit (10) den Ablassvorgang abbricht, wenn dies nicht der Fall ist.

4. Verfahren nach einem der Ansprüche 1 bis 3, **dadurch gekennzeichnet, daß**,
- wenn das unmittelbar vor dem Ablassvorgang ermittelte Niveau dem oder ungefähr dem Maximalniveau entspricht, die Steuereinheit (10) den Ablassvorgang abbricht, wenn sich der Fahrzeugaufbau nach einer Zeitspanne, nach der sich dieser auch bei minimaler Zuladung aus dem Maximalniveau absenken müßte, nicht aus dem unmittelbar vor dem Ablassvorgang ermittelten Niveau abgesenkt hat.

5. Verfahren nach einem der Ansprüche 1 oder 2, **dadurch gekennzeichnet, daß**
- die Zeitspanne in Zeitintervalle unterteilt wird und eine Überprüfung stattfindet, ob sich während eines Zeitintervalls der Fahrzeugaufbau mindestens um ein vorgegebenes Maß gegenüber dem unmittelbar vor dem Ablassvorgang ermittelten Niveau abgesenkt hat und ob die Radaufstandskräfte zumindest nahezu gleichgeblieben sind, und
- die Steuereinheit (10) den Ablassvorgang abbricht, wenn dies nicht der Fall ist.

6. Verfahren nach einem der Ansprüche 1 bis 5, **dadurch gekennzeichnet, daß** die Niveauregelanlage mindestens eine Luftfeder (2a; 2b) enthält, mit der der Fahrzeugaufbau federnd gelagert ist und daß während eines Ablassvorganges Druckluft aus der Luftfeder abgelassen wird.

7. Verfahren nach Anspruch 6, **dadurch gekennzeichnet, daß**
- vor der Einleitung eines Ablassvorganges an zumindest einer Luftfeder (2a; 2b) deren Luftdruck erfasst wird,
- aus der Luftfeder (2a; 2b) über eine Zeitspanne Luft abgelassen wird, bis in der Luftfeder (2a; 2b) ein minimaler Luftdruck unterschritten ist, der so vorgegeben ist, daß sich der Fahrzeugaufbau auch bei minimaler Zuladung aus dem ermittelten Niveau absenken müßte, und
- die Steuereinheit (10) den Ablassvorgang abbricht, wenn dies bis zum Ende der Zeitspanne nicht der Fall ist.

8. Verfahren nach Anspruch 7, **dadurch gekennzeichnet, daß** die Zeitspanne, über die Luft aus der Luftfeder (2a; 2b) abgelassen wird, so gewählt ist, daß der Luftdruck in der Luftfeder (2a; 2b) innerhalb der Zeitspanne von einem maximalen Luftdruck bei maximaler Zuladung bis unter den Luftdruck minimaler Zuladung abfällt.

9. Verfahren nach einem der Ansprüche 1 bis 8, **dadurch gekennzeichnet, daß** es nur durchgeführt wird, wenn die Geschwindigkeit des Kraftfahrzeuges einen vorgegebenen Wert unterschreitet.

10. Verfahren nach einem der Ansprüche 1 bis 9, **dadurch gekennzeichnet, daß** nach einem Abbruch eines Ablassvorganges bei ausgeschaltetem Motor des Kraftfahrzeuges eine von einer Person eingeleitete Niveauänderung des Fahrzeugaufbaus erst nach Einschalten des Motors vorgenommen werden kann.

11. Verfahren nach einem der Ansprüche 1 bis 10, **dadurch gekennzeichnet, daß** nach einem Abbruch eines Ablassvorganges bei eingeschaltetem Motor des Kraftfahrzeuges vorübergehend ausschließlich ein Anhebevorgang des Fahrzeugaufbaus eingeleitet werden kann.

12. Verfahren nach einem der Ansprüche 10 oder 11, **dadurch gekennzeichnet, daß** ein Ablassvorgang des Fahrzeugaufbaus erst dann wieder eingeleitet werden kann, wenn die Geschwindigkeit des Kraftfahrzeuges einen Grenzwert überschreitet oder wenn nach dem Ausschalten der Zündung ein erneutes Einschalten der Zündung erfolgt.

13. Verfahren nach Anspruch 12, **dadurch gekennzeichnet, daß** ein Ablassvorgang des Fahrzeugaufbaus erst dann wieder eingeleitet werden kann, wenn sich zusätzlich das aktuell ermittelte Niveau unterhalb des Maximalniveaus befindet.

## Claims

1. Method for performing open-loop or closed-loop control of the ride level of a vehicle body of a motor vehicle by means of a ride level control system having actuator elements (2a; 2b) with which the ride level of the vehicle body can be lowered by discharging an actuating medium from the actuator elements (2a; 2b), and having a control unit (10) in the following method steps:
- the ride level of the vehicle body is determined in relation to a reference point,
- a lowering process of the vehicle body is initiated if the level which is determined is above a predefined level,
**characterized in that** after the initiating of the lowering process in the control unit (10) it is checked whether the vehicle body has been lowered according to a predefined value from the level determined directly before the lowering process, **characterized in that**
- a small quantity of the actuating medium is discharged from an actuator element, which quantity is significantly smaller than the quantity of the actuating medium which would have to be discharged from the actuator element in order to lower the vehicle body from the level determined before the lowering process to the predefined level,
- in the control unit (10) it is checked whether the vehicle body has been lowered with respect to the level determined directly before the lowering process, and **in that**
- the control unit (10) aborts the lowering process if this is not the case.

2. Method according to Claim 1, **characterized in that** the pressure of the actuating medium or the wheel contact forces are recorded and the control unit (10) aborts a lowering process even if the vehicle body has been lowered after a time period but the pressure of the actuating medium or at least a wheel contact force has reduced beyond a predefined amount.

3. Method according to one of Claims 1 to 2,
**characterized in that**
- the time period is divided into time intervals, and the checking takes place as to whether during a time interval the vehicle body has been lowered with respect to the level determined before the lowering process, and
- the control unit (10) aborts the lowering process if this is not the case.

4. Method according to one of Claims 1 to 3,
**characterized in that**
- if the level determined directly before the lowering process corresponds, or corresponds approximately, to the maximum level, the control unit (10) aborts the lowering process if, after a time period after which the vehicle body would have to be lowered from the maximum level even when there is a minimum useful load, said vehicle body has not been lowered from the level determined immediately before the lowering process.

5. Method according to one of Claims 1 or 2,
**characterized in that**
- the time period is divided into time intervals, and checking takes place as to whether during a time interval the vehicle body has been lowered by at least a predefined amount with respect to the level determined immediately before the lowering process, and whether the wheel contact forces have remained at least virtually the same, and
- the control unit (10) aborts the lowering process if this is not the case.

6. Method according to one of Claims 1 to 5, **characterized in that** the ride level control system contains at least one air spring (2a; 2b) with which the vehicle body is mounted in a sprung fashion, and **in that** compressed air is discharged from the air spring during a lowering process.

7. Method according to Claim 6, **characterized in that**
- before the initiation of a lowering process at at least one air spring (2a; 2b), the air pressure of said air spring is recorded,
- air is discharged from the air spring (2a; 2b) over a time period until the air pressure in the air spring (2a; 2b) drops below a minimum value which is predefined in such a way that the vehicle body would be lowered from the determined level even in the case of minimum useful load, and
- the control unit (10) aborts the lowering process if this is not the case up to the end of the time period.

8. Method according to Claim 7, **characterized in that** the time period over which air is discharged from the air spring (2a; 2b) is selected in such a way that the air pressure in the air spring (2a; 2b) drops within the time period from a maximum air pressure when there is a maximum useful load to below the air pressure in the case of a minimum useful load.

9. Method according to one of Claims 1 to 8, **characterized in that** said method is carried out only if the velocity of the motor vehicle is less then a predefined value.

10. Method according to one of Claims 1 to 9, **characterized in that,** after the lowering process has been aborted when the engine of the motor vehicle is switched off, a change in ride level of the vehicle body which is initiated by a person cannot be performed until after the engine has been switched on.

11. Method according to one of Claims 1 to 10, **characterized in that,** after a lowering process has been aborted when the engine of the motor vehicle is switched on, for a certain time only a raising process of the vehicle body can be initiated.

12. Method according to one of Claims 10 or 11, **characterized in that** a lowering process of the vehicle body cannot be initiated again until the velocity of the motor vehicle exceeds a limiting value or renewed switching on of the ignition occurs after the ignition has been switched off.

13. Method according to Claim 12, **characterized in that** a lowering process of the vehicle body is not initiated again until the currently determined ride level is additionally below the maximum ride level.

## Revendications

1. Procédé pour commander ou réguler le niveau d'une carrosserie d'un véhicule automobile au moyen d'une installation de régulation de niveau avec des organes de commande (2a ; 2b), avec lesquels le niveau de la carrosserie du véhicule peut être abaissé en laissant s'échapper un fluide de commande hors des organes de commande (2a ; 2b) et avec une unité de commande (10), ayant les étapes de procédé suivantes :
- le niveau de la carrosserie du véhicule est déterminé par rapport à un point de référence,
- une opération de vidange au niveau de la carrosserie du véhicule est amorcée si le niveau déterminé est au-dessus d'un niveau prédéfini,
**caractérisé en ce que**
l'on vérifie dans l'unité de commande (10), après l'amorçage de l'opération de vidange, si la carrosserie du véhicule est descendue conformément à une prescription initiale depuis le niveau déterminé immédiatement avant l'opération de vidange, de telle sorte que
- l'on laisse s'échapper une petite quantité du fluide de commande d'un organe de commande, laquelle est considérablement plus petite que la quantité de fluide de commande que l'on a dû laisser s'échapper hors de l'organe de commande pour descendre la carrosserie du véhicule du niveau déterminé avant l'opération de vidange jusqu'au niveau prédéfini,
- l'on vérifie, dans l'unité de commande (10), si la carrosserie du véhicule est descendue par rapport au niveau déterminé immédiatement avant l'opération de vidange, et **en ce que**
- l'unité de commande (10) interrompt l'opération de vidange si ce n'est pas le cas.

2. Procédé selon la revendication 1, **caractérisé en ce que** la pression du fluide de commande ou les forces de support des roues sont détectées et l'unité de commande (10) interrompt alors aussi l'opération de vidange si la carrosserie du véhicule est descendue après une certaine période de temps, mais que la pression du fluide de commande ou au moins une force de support des roues a diminué au-delà d'une mesure prédéterminée.

3. Procédé selon l'une quelconque des revendications 1 à 2, **caractérisé en ce que**
- la période de temps est divisée en intervalles de temps et l'on vérifie si la carrosserie du véhicule est descendue pendant un intervalle de temps par rapport au niveau déterminé immédiatement avant l'opération de vidange, et
- l'unité de commande (10) interrompt l'opération de vidange si ce n'est pas le cas.

4. Procédé selon l'une quelconque des revendications 1 à 3, **caractérisé en ce que**
- lorsque le niveau déterminé immédiatement avant l'opération de vidange correspond au niveau maximum ou approximativement au niveau maximum, l'unité de commande (10) interrompt l'opération de vidange si la carrosserie du véhicule, après une période de temps après laquelle elle aurait dû descendre depuis le niveau maximum même avec un chargement minimal, n'est pas descendue depuis le niveau déterminé immédiatement avant l'opération de vidange.

5. Procédé selon l'une quelconque des revendications 1 ou 2, **caractérisé en ce que**
- la période de temps est divisée en intervalles de temps et l'on vérifie, si, pendant un intervalle de temps, la carrosserie du véhicule est descendue d'au moins une mesure prédéfinie par rapport au niveau déterminé immédiatement avant l'opération de vidange, et si les forces de support des roues sont restées au moins presque identiques et
- l'unité de commande (10) interrompt l'opération de vidange si ce n'est pas le cas.

6. Procédé selon l'une quelconque des revendications 1 à 5, **caractérisé en ce que** l'installation de régulation de niveau contient au moins un ressort pneumatique (2a ; 2b) avec lequel la carrosserie du véhicule est montée à suspension, et **en ce que** pendant une opération de vidange, on laisse s'échapper de l'air sous pression hors du ressort pneumatique.

7. Procédé selon la revendication 6, **caractérisé en ce que**
- avant l'amorçage d'une opération de vidange, on détecte, au niveau d'au moins un ressort pneumatique (2a ; 2b) quelle est sa pression d'air,
- on laisse s'échapper de l'air du ressort pneumatique (2a ; 2b) pendant une certaine période de temps jusqu'en dessous d'une pression d'air minimale dans le ressort pneumatique (2a ; 2b), cette pression minimale étant prédéfinie de telle sorte que la carrosserie du véhicule doive descendre même en cas de chargement minimal, depuis le niveau déterminé et
- l'unité de commande (10) interrompt l'opération de vidange si ce n'est pas le cas jusqu'à la fin de la période de temps.

8. Procédé selon la revendication 7, **caractérisé en ce que** la période de temps pendant laquelle on laisse s'échapper de l'air du ressort pneumatique (2a ; 2b) est choisie de telle sorte que la pression d'air dans le ressort pneumatique (2a ; 2b) chute pendant la période de temps depuis une pression d'air maximale pour un chargement maximal jusqu'en dessous de la pression d'air de chargement minimal.

9. Procédé selon l'une quelconque des revendications 1 à 8, **caractérisé en ce qu'**il est mis en oeuvre seulement lorsque la vitesse du véhicule automobile est inférieure à une valeur prédéfinie.

10. Procédé selon l'une quelconque des revendications 1 à 9, **caractérisé en ce qu'**après une interruption d'une opération de vidange lorsque le moteur du véhicule automobile est coupé, on peut effectuer une modification du niveau de la carrosserie du véhicule demandée par une personne seulement après le démarrage du moteur.

11. Procédé selon l'une quelconque des revendications 1 à 10, **caractérisé en ce qu'**après une interruption d'une opération de vidange lorsque le moteur du véhicule automobile est démarré, on peut amorcer essentiellement exclusivement une opération de levage de la carrosserie du véhicule.

12. Procédé selon l'une quelconque des revendications 10 ou 11, **caractérisé en ce qu'**une opération de vidange au niveau de la carrosserie du véhicule ne peut alors être réamorcée que si la vitesse du véhicule automobile dépasse une valeur limite ou si, après une coupure de l'allumage, une nouvelle réinitialisation de l'allumage a lieu.

13. Procédé selon la revendication 12, **caractérisé en ce qu'**une opération de vidange au niveau de la carrosserie du véhicule ne peut alors être réamorcée que si le niveau déterminé actuellement est en outre en dessous du niveau maximal.
